# EUROPÄISCHE PATENTSCHRIFT

(11) **EP 3 210 508 B1**
(45) Veröffentlichungstag und Bekanntmachung des Hinweises auf die Patenterteilung: **05.12.2018**
(21) Anmeldenummer: 17157741.4
(22) Anmeldetag: 23.02.2017
(51) Int. Cl.: A47J 37/06, A47J 37/08

(54) **ELEKTRISCHER GRILL**
ELECTRIC GRILL
GRIL ÉLECTRIQUE

(30) Priorität: 23.02.2016 DE 102016002025
(43) Veröffentlichungstag der Anmeldung: 30.08.2017
(73) Patentinhaber: Schneider, Tim, 50825 Köln (DE)
(72) Erfinder: Schneider, Tim, 50825 Köln (DE); Curland, Claas, 38102 Braunschweig (DE)

(56) Entgegenhaltungen:
- WO-A1-2017/025543
- DE-A1- 2 611 301
- DE-A1- 2 756 968
- DE-T2- 69 936 055
- FR-A1- 2 975 883
- US-A- 2 397 040
- US-A1- 2005 000 958

## Beschreibung

Elektrisch betriebene Grills erfreuen sich einer großen Beliebtheit, da sie in der Regel einfach zu betreiben sind und im Vergleich zu konventionellen Kohlegrills keinen Rauch erzeugen. Eine Alternative zu Elektrogrills stellen Gasgrills dar, die sich jedoch nur bedingt für den Betrieb in geschlossenen Räumen oder der Wohnung eignen, da oft Sicherheitsbedenken beim Betrieb von Gasanlagen vorherrschen. Elektrisch betriebene Grills erreichen jedoch oft nur eine Temperatur von 150 °C, Gas- und Kohlegrills hingegen Temperaturen von 300 °C bis 600 °C.
Die Zubereitung von hochwertigem Grillfleisch erfordert zur Bildung einer karamellisierten Grillkruste eine Temperatur von über 600 °C, die mit bekannten elektrisch betriebenen Grills bislang nicht erreicht wird. Darüber hinaus werden elektrisch betriebene Grills mit Widerstandsheizungen in Form einer Heizspindel betrieben, welche bekanntlich einen unter heutigen Gesichtspunkten schlechten Wirkungsgrad aufweisen. Aus der FR 2 975 883 ist ein Infrarot-Gas-Grill mit obenliegenden horizontal angeordneten Infrarotheizelementen bekannt, wobei das Grillgut darunter angeordnet ist. Darüberhinaus zeigt das Dokument eine Ausführungsform mit einer unterhalb dem Infrarotheizelement angeordneten Auffangwanne, die bspw. mit Wasser gefüllt sein kann. Dies hat den Nachteil, dass das Grillgut nur einseitig mit Hitze beaufschlag wird.
Das Dokument DE 699 36 055 T2 zeigt eine Erhitzungseinheit und Kochgerät, wobei die Heizelemente horizontal unterhalb des Grillguts angeordnet sind und somit das Grillgut ebenfalls nur von einer Seite mit Hitze beaufschlagen.
Die DE 26 11 301 zeigt ein Verfahren und Gerät zur Zubereitung eines Nahrungsmittelprodukts. Das Gerät umfasst ein Gehäuse, eine Garkammer und zwei Infrarot-Batterien die vertikal entgegengesetzt angeordnet sind. Das Grillgut wird in einem Rost aufgenommen der vertikal zwischen den Infrarot-Batterien angeordnet werden kann, wobei die Infrarot-Batterien fest mit dem Gehäuse verbunden sind und sich nicht an das Grillgut anpassen.
Dies hat den Nachteil, dass die Strahlungsintensität die auf dem Grillgut auftrifft, von der Dicke des Grillguts abhängt.

Daher stellt sich dem Fachmann die Aufgabe, einen elektrisch betriebenen Grill zu schaffen, welcher eine Temperatur von mehr als 600 °C erreicht und dabei einen höheren Wirkungsgrad als konventionelle elektrisch betriebene Grills aufweist.
Diese Aufgabe wird erfindungsgemäß durch einen Grill mit den Merkmalen von Anspruch 1 gelöst.
Weitere Merkmale der Erfindung sind in den Unteransprüchen beschrieben.
Erfindungsgemäß umfasst ein elektrischer Grill zum Grillen von Grillgut, beispielsweise Fleisch, ein Gehäuse, ein am Gehäuse aufgenommenes erstes Heizelement und ein Grillrost. Der erfindungsgemäße Grill zeichnet sich dadurch aus, dass das erste Heizelement ein elektrischer Infrarot-Flächenstrahler ist, welcher eine Temperatur von mehr als 600 °C, vorzugsweise mehr als 800 °C, bevorzugt mehr als 850 °C, besonders bevorzugt mehr als 900 °C erreicht. Dabei erfolgt die Temperaturmessung an der Oberfläche des elektrischen Infrarot-Flächenstrahlers oder beispielsweise über ein im Innern des Infrarot-Flächenstrahlers verbauten Temperatursensor.
Das Gehäuse des Grills besteht vorzugsweise überwiegend aus Edelstahl oder anderem temperaturbeständigen Material wie Gusseisen, Quarzglas, Keramik oder Kunststoff.

Die elektrische Leistung des Grills ist vorzugsweise so zu wählen, dass der Grill an einer konventionellen 230 V Steckdose mit üblicherweise ca. 3,6 kW und/oder einer Dreiphasenwechselstromsteckdose mit ca. 400 V und üblicherweise 22 kW betrieben werden kann. Diese Auslegung ermöglicht den Betrieb des Grills in privaten Haushalten sowie in Gastronomiebetrieben.

Die hohe Grilltemperatur des Grills führt im Innern des Gehäuses zu einer starken Erwärmung, daher kann das Gehäuse zu seiner Umgebung zumindest teilweise thermisch isoliert sein, um sowohl die Brandgefahr als auch das Verletzungsrisiko zu reduzieren.

Der Grillrost besteht bevorzugt überwiegend aus lebensmittelgeeignetem Stahl, Quarzglas oder Keramik und ist vorzugsweise zweiteilig aufgebaut, in der Art, dass der Grillrost an unterschiedlich starkes beziehungsweise dickes Grillgut anpassbar ist und dieses sicher aufnimmt.

Bei einer bevorzugten Ausführungsform des Grills ist der erste elektrische Infrarot-Flächenstrahler vertikal am Gehäuse aufgenommen und der Grillrost parallel zur Abstrahlfläche des ersten elektrischen Infrarot-Flächenstrahler am Gehäuse positionierbar geführt. Der Grillrost ist dabei in der Weise am Gehäuse aufgenommen beziehungsweise geführt, dass der Grillrost im Wesentlichen im Abstrahlbereich des ersten elektrischen Infrarot-Flächenstrahlers positionierbar ist.

Dies hat den Vorteil, dass die aus dem Grillgut während des Grillens austretenden Flüssigkeiten nicht auf den elektrischen Infrarot-Flächenstrahler tropfen und verbrennen. Diese Verbrennungsrückstände sind gesundheitsschädlich und lagern sich bei konventionellen Grillanordnung mit einem Heizelement unterhalb des Grillrosts nach dem Verbrennen auf dem Grillgut ab.

Nach einer weiteren bevorzugten Ausführungsform der Erfindung ist ein weiterer elektrischer Infrarot-Flächenstrahler auf der dem ersten elektrischen Infrarot-Flächenstrahler gegenüberliegenden Seite am Gehäuse aufgenommen.

Dies hat den Vorteil, dass der Grillrost zwischen den Infrarot-Flächenstrahlern positionierbar ist und dass das im Grillrost befindliche Grillgut gleichmäßig von beiden Seiten mit Hitze beaufschlagt wird. Somit wird das Grillgut nahezu gleichzeitig von allen Seiten gegrillt und die Poren des Grillguts verschließen sich gleichmäßig, wodurch ein Austreten von Flüssigkeit aus dem Grillgut verhindert wird. Dies führt dazu, dass beispielsweise Grillfleisch nach dem Grillen sehr saftig ist.

Nach einem weiteren erfindungsgemäßen Gedanken ist der Grillrost über eine Zentriereinrichtung geführt, welche den Grillrost unabhängig vom Grillgut, vorzugsweise mittig zwischen den elektrischen Infrarot-Flächenstrahlern positioniert. Die Zentriereinrichtung ist am Gehäuse aufgenommen und umfasst vorzugsweise paarweise angeordnete entgegengerichtete c-förmige Federstahl-Bleche, welche an ihrer offenen Seite am Gehäuse aufgenommen sind. Der Grillrost ist vorzugsweise zwischen den c-förmigen Federstahl-Blechen einschiebbar und aufgrund der gleichmäßig beidseitig wirkenden c-förmigen Federstahl-Bleche mittig ausgerichtet.

Dies hat den Vorteil, dass das Grillgut auf beiden Seiten einen nahezu gleichen Abstand zum jeweiligen elektrischen Infrarot-Flächenstrahler hat und so ein ungewolltes ungleichmäßiges Grillen verhindert wird.

Der Grillrost kann beispielsweise von oben her in das Gehäuse durch eine Öffnung auf der Oberseite des Gehäuses eingeschoben werden, wobei die Zentriereinrichtung bei dieser Anordnung auf die jeweilige linke und rechte Außenkante des Grillrosts wirkt.

Nach einer weiteren Ausführungsform der Erfindung kann der Grillrost von vorne in das Gehäuse durch eine Öffnung auf der Frontseite des Gehäuses eingeschoben werden, wobei die Zentriereinrichtung bei dieser Anordnung auf die jeweilige obere und untere Außenkante des Grillrosts wirkt.

Der Grillrost ist vorzugsweise an unterschiedlich dickes Grillgut anpassbar, beispielsweise kann der Grillrost über eine linearverschiebbare Führung auseinander- und zusammenfahrbar sein. Der Verstellbereich des Grillrosts liegt zwischen 0,3 cm und 8 cm, bevorzugt zwischen 0,4 cm und 6 cm, besonders bevorzugt zwischen 0,5 cm und 5 cm.

Bei der zuvor beschriebenen Ausführungsform der Erfindung ist es von besonderem Vorteil, wenn der erste elektrische Infrarot-Flächenstrahler an der Zentriereinrichtung aufgenommen ist, in der Art, dass der Abstand zwischen dem ersten elektrischen Infrarot-Flächenstrahler und dem Grillrost über den Verstellbereich des Grillrosts im Wesentlichen konstant ist.

Dies hat den Vorteil, dass auch bei unterschiedlich dickem Grillgut ein konstanter Abstand zum Infrarot-Flächenstrahler erreicht wird. Bei zunehmendem Abstand zwischen dem Infrarot-Flächenstrahler und dem Grillgut nimmt die Strahlungsdichte der auf dem Grillgut direkt auftreffenden Infrarotstrahlung ab und führt zu einer verringerten Grilltemperatur.

Nach einem weiteren der Erfindung zugrunde liegenden Gedanken, umfasst der elektrische Grill weiterhin einen Temperatursensor und eine Steuerungseinheit, über welche zumindest der erste Infrarot-Flächenstrahler steuerbar und/oder regelbar ist, bevorzugt in Abhängigkeit der Temperatur. Der Temperatursensor erfasst die momentane Temperatur, vorzugsweise an der Oberfläche des Infrarot-Flächenstrahlers und die Steuerungseinheit steuert und/oder regelt in Abhängigkeit dieser Temperatur den Infrarot-Flächenstrahler.

In vorteilhafter Weise umfasst die Steuerungseinheit einen nichtflüchtigen elektronischen Speicher, wie beispielsweise ein EEPROM oder FLASH, in dem Temperaturverläufe und/oder Temperaturkurven abspeicherbar sind.

Daraus ergibt sich der Vorteil, dass beispielsweise eine Temperaturkurve für Rindfleisch im Speicher der Steuerungseinheit abgelegt ist und nach dem Einschalten des Grills die Temperatur in Abhängigkeit dieser Temperaturkurve gesteuert- beziehungsweise geregelt wird.

Bei der zuvor beschriebenen Ausführungsform ist es besonders vorteilhaft, dass der elektrische Grill weiterhin eine Ein- und Ausgabeeinheit zur Eingabe von Grill-Parametern und/oder Anzeige von Grill-Parametern, vorzugsweise Temperatur und/oder Grilldauer umfasst und dass die Ein- und Ausgabeeinheit mit der Steuerungseinheit kommuniziert.

Dies hat den Vorteil, dass ein Benutzer über die Ein- und Ausgabeeinheit eine Temperaturkurve aus dem Speicher der Steuerungseinheit auswählen kann und/oder neue Temperaturkurven in den Speicher der Steuerungseinheit ablegen kann.

Nach einem weiteren der Erfindung zugrunde liegenden Gedanken umfasst der elektrische Grill weiterhin einen Ventilator, welcher die Luft vorzugsweise oberhalb des Grillrosts absaugt und durch einen Luftkanal im Innern des Gehäuses unterhalb des Grillrosts ausbläst.

Dies hat den Vorteil, dass die erwärmte Luft oberhalb des Grillguts abgesaugt und unterhalb des Grillguts ausgeblasen wird, wobei im Bereich des Grillguts eine Heißluftatmosphäre entsteht. Diese Konzentration der Wärmeströmung beziehungsweise Konvektion führt zu einer weiteren Steigerung des Wirkungsgrades.

Nach einem weiteren der Erfindung zugrunde liegenden Gedanken umfasst der Luftkanal einen Filter, vorzugsweise einen Metallfilter mit Flammendurchschlagsicherung durch den die abgesaugte Luft geleitet wird.

Dies hat den Vorteil, dass der Filter den typischen Grillgeruch reduziert, indem die aus dem Grillgut während des Grillens gelösten Fette und Rückstände aus der Luft herausgefiltert werden. Diese lagern sich über die Nutzungsdauer in dem Filter ab und können aufgrund der hohen Lufttemperaturen entzündet werden. Die Flammendurchschlagsicherung verhindert ein Austreten einer möglicherweise entstehenden Flamme aus dem Luftkanal, da dieser wie eine Barriere für eine Flamme wirkt.

Nach einem weiteren erfindungsgemäßen Gedanken, ist der erste elektrische Infrarot-Flächenstrahler ein elektrisch betriebener keramischer Infrarot-Flächenstrahler, welcher Infrarotstrahlung im Wesentlichen im Wellenlängenbereich von 3 µm bis 50 µm aussendet, bevorzugt im Wellenlängenbereich von 3 µm bis 40 µm, besonders bevorzugt im Wellenlängenbereich von 4 µm bis 20 µm.

Dies hat den Vorteil, dass dieser Wellenlängenbereich besonders zur Wärmeübertragung geeignet ist.

Ein erfindungsgemäßer Infrarot-Flächenstrahler umfasst zumindest ein Heizelement, beispielsweise einen Heizdraht in einem Gehäuse, insbesondere einem keramischen Gehäuse. Bevorzugt umfasst ein Infrarot-Flächenstrahler zwei Heizelemente in jeweils einem keramischen Gehäuse oder einem gemeinsamen Gehäuse.

Die Erfindung wird nachfolgend mit Bezug auf die Zeichnungen anhand bevorzugter Ausführungsformen beschrieben.

In den Zeichnungen zeigt:
- Figur 1: eine räumliche Ansicht eines erfindungsgemäßen Grills 1 mit einem auf der Oberseite des Gehäuses 2 angeordneten Einschub 101 zu einer Grillkammer 5,
- Figur 2: eine räumliche Ansicht eines erfindungsgemäßen Grills 1 mit einem ersten auf der Oberseite des Gehäuses 2 angeordneten Einschub 101 zu einer Grillkammer 5 und einem benachbarten zu dem ersten Einschub 101 angeordneten zweiten Einschub 102 zu einer Garkammer 7,
- Figur 3: eine räumliche Ansicht eines erfindungsgemäßen Grills 1 mit einem auf der Frontseite des Gehäuses 2 angeordneten Einschub 101 zu einer Grillkammer 5,
- Figur 4: eine räumliche Ansicht eines erfindungsgemäßen Grills 1 mit einem ersten auf der Frontseite des Gehäuses 2 angeordneten Einschub 101 zu einer Grillkammer 5 und einem benachbarten zu dem ersten Einschub 101 angeordneten zweiten Einschub 102 zu einer Garkammer 7,
- Figur 5: eine räumliche Ansicht eines erfindungsgemäßen Grills 1 mit einem ersten auf der Frontseite des Gehäuses 2 angeordnetem Einschub 101 zu einer Grillkammer 5 und einem benachbarten zu dem ersten Einschub 101 angeordneten zweiten Einschub 102 zu einer Garkammer 7 sowie eine auf der Oberseite des Grills 1 angeordnete Ablage 104,
- Figur 6: eine schematische Schnittdarstellung eines erfindungsgemäßen Grills 1 mit einem Einschub 101 zu einer Grillkammer 5,
- Figur 7: eine schematische Schnittdarstellung eines erfindungsgemäßen Grills 1 mit einem Einschub 101 zu einer Grillkammer 5 sowie ein vor dem Infrarot-Flächenstrahler 4 angeordnetes Schutzglas 114,
- Figur 8: eine schematische Schnittdarstellung eines erfindungsgemäßen Grills 1 mit einem Einschub 101 zu einer Grillkammer 5 sowie ein vor dem Infrarot-Flächenstrahler 4 angeordnetes Schutzglas 114 und einer unterhalb der Grillkammer 5 angeordneten Auffangschale 118,
- Figur 9: eine schematische Schnittdarstellung eines erfindungsgemäßen Grills 1 mit einem Einschub 101 zu einer Grillkammer 5 sowie einen Ventilator 20,
- Figur 10: eine schematische Schnittdarstellung eines erfindungsgemäßen Grills 1 mit einem ersten Einschub 101 zu einer Grillkammer 5 und einem benachbarten zu dem ersten Einschub 101 angeordneten zweiten Einschub 102 zu einer Garkammer 7 sowie einen Ventilator 20,
- Figur 11: eine schematische Schnittdarstellung eines erfindungsgemäßen Grills 1 mit einem ersten Einschub 101 zu einer Grillkammer 5 und einem benachbarten zu dem ersten Einschub 101 angeordneten zweiten Einschub 102 zu einer Garkammer 7,
- Figur 12: eine schematische Schnittdarstellung eines erfindungsgemäßen Grills 1 mit einem Einschub 101 zu einer Grillkammer 5 sowie einen Ventilator 20 und einen Filter 26,
- Figur 13: ein Funktions-Blockdiagramm eines erfindungsgemäßen Grills 1 mit einer Steuerungseinheit 16,
- Figur 14: eine beispielhafte Temperaturkurve eines erfindungsgemäßen Grills 1 mit einer Steuerungseinheit 16 sowie einen Temperatursensor 14.

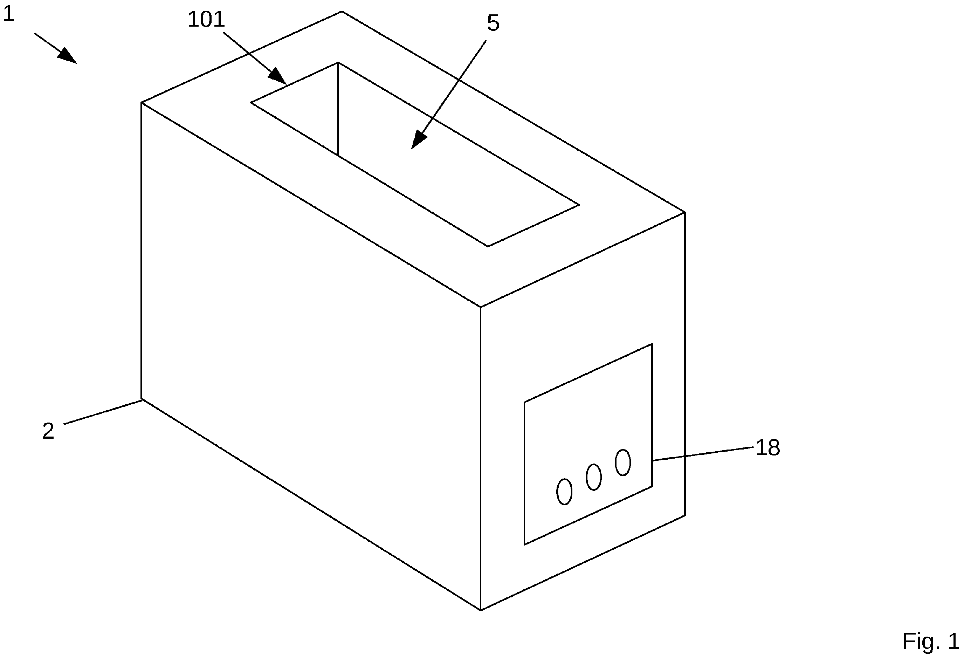

Wie in Fig. 1 gezeigt wird, umfasst eine Ausführungsform des erfindungsgemäßen elektrischen Grills 1 ein vorzugsweise umfänglich geschlossenes Gehäuse 2 mit einem Einschub 101 zu einer Grillkammer 5 auf der Oberseite des Gehäuses 2 sowie eine an der Frontseite und/oder an einer der anderen Seiten des Gehäuses 2 angeordnete Ein- und Ausgabeeinheit 18. Die Ein- und Ausgabeeinheit 18 umfasst wie in der Fig.1 nur beispielhaft angedeutet Schalter, beispielsweise Kippschalter, Drehschalter, Dreh-Drück-Steller, Drehencoder, Drehregler, Resistive-Schalter, Kapazitive-Schalter sowie weiterhin ein handelsübliches Display, beispielsweise ein LCD-Display, eine LED-Matrix, ein TFT-Display, E-Ink Display und/oder ein Touchscreen.

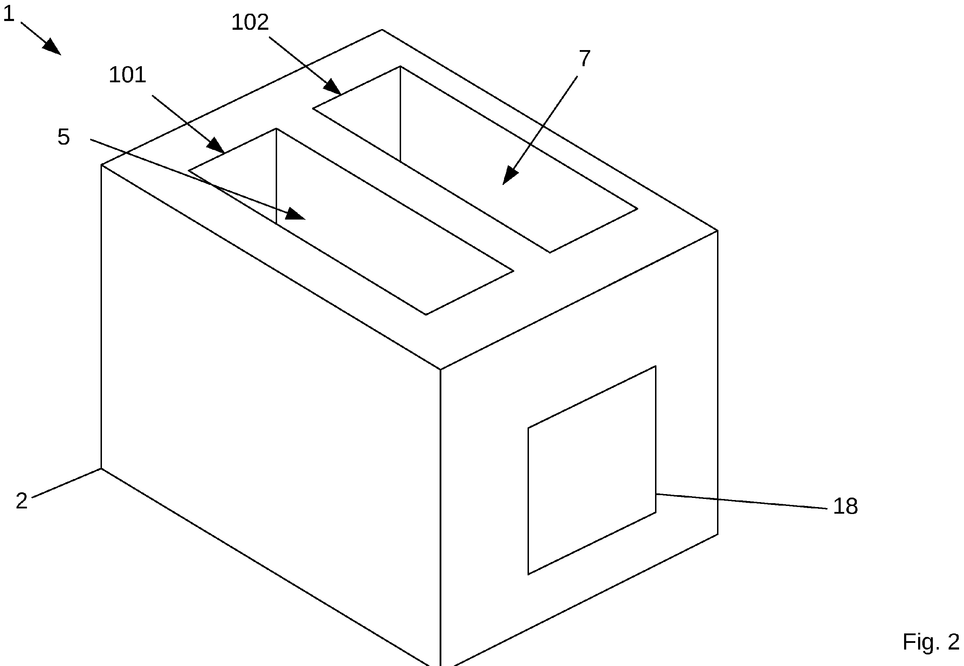

Die Fig. 2 zeigt eine Ausführungsform des erfindungsgemäßen elektrischen Grills 1 mit zwei auf der Oberseite des Gehäuses 2 angeordneten Einschüben, einen ersten Einschub 101 zu einer Grillkammer 5 sowie einen paarweise dazu angeordneten zweiten Einschub 102 zu einer Garkammer 7 mit jeweils einem zugeordneten nicht gezeigten ersten Grillrost 6 und zweiten Grillrost 200.

Diese Ausführungsform bietet den Vorteil, dass das Grillgut nach dem Grillen in der Grillkammer 5 vorzugsweise mit dem ersten Grillrost 6 über den zweiten Einschub 102 in die Garkammer 7 eingeschoben werden kann. In der Garkammer 7 herrscht eine Temperatur deutlich unter der Temperatur der Grillkammer 5 vorzugsweise im Bereich von 20 °C bis 200 °C, bevorzugt im Bereich von 40 °C bis 180 °C, besonders bevorzugt im Bereich von 50 °C bis 150 °C. Dabei kann es ausreichend sein, zwischen der Grillkammer 5 und Garkammer 7 eine nicht isolierte Zwischenwand anzuordnen, sodass in der Garkammer 7 die Temperatur überwiegend durch Konvektion erreicht wird.

Weiterhin bietet diese Ausführungsform den Vorteil, dass das Grillgut, beispielsweise Rindfleisch zunächst durch den Einschub 101 in der Grillkammer 5 mit dem ersten Grillrost 6 gegrillt wird. Anschließend wird das Grillgut mit dem ersten Grillrost 6 durch den zweiten Einschub 102 in die Garkammer 7 eingeschoben. Daraufhin wird ein weiteres Grillgut mit dem zweiten Grillrost 200 durch den ersten Einschub 101 in die Grillkammer 5 eingeschoben und gegrillt. Nachdem das erste Grillgut in der Garkammer 7 fertig gegart ist, wird das weitere Grillgut mit dem zweiten Grillrost 200 durch den zweiten Einschub 102 in die Garkammer 7 eingeschoben. Dieses Verfahren kann nahezu beliebig wiederholt werden und eine große Anzahl von Grillgut kann in einer Art kontinuierlichem Prozess hergestellt werden.

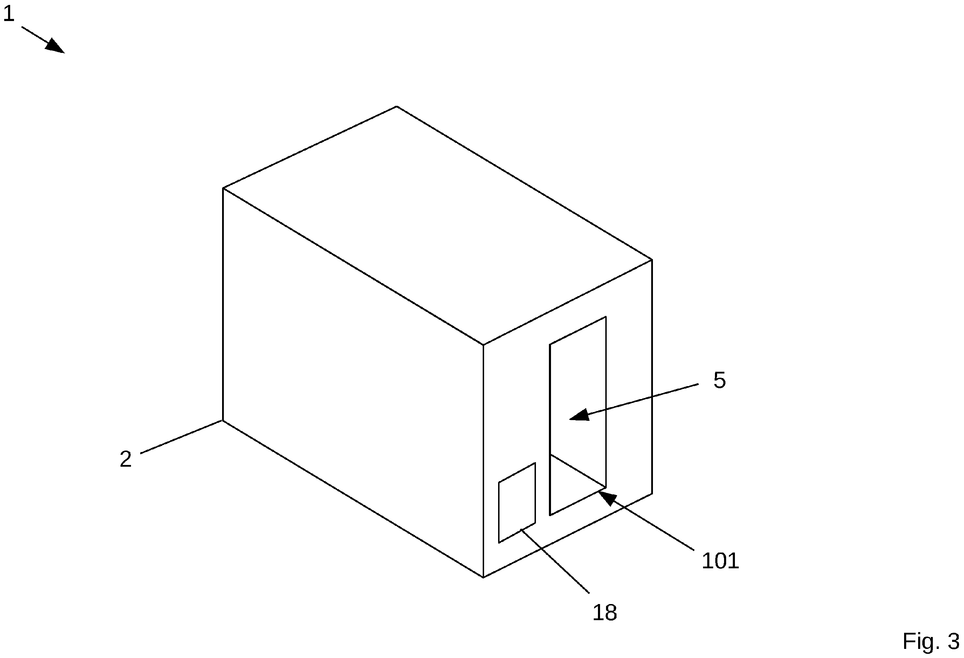

Fig. 3 zeigt eine Ausführungsform des erfindungsgemäßen elektrischen Grills 1 mit einem auf der Frontseite des Gehäuses 2 angeordneten Einschub 101 zu einer Grillkammer 5 sowie einer auf der Frontseite des Gehäuse 2 angeordneten Ein- und Ausgabeeinheit 18.

Diese bevorzugte Ausführungsform des erfindungsgemäßen elektrischen Grills 1 hat den Vorteil, dass der Grill 1 beispielsweise in einer Küchenzeile und/oder einem Geräteträger eingebaut werden kann. Dies bietet besonders im Bereich der Gastronomie den Vorteil eine Vielzahl der erfindungsgemäßen Grills 1 nebeneinander und/oder übereinander anzuordnen.

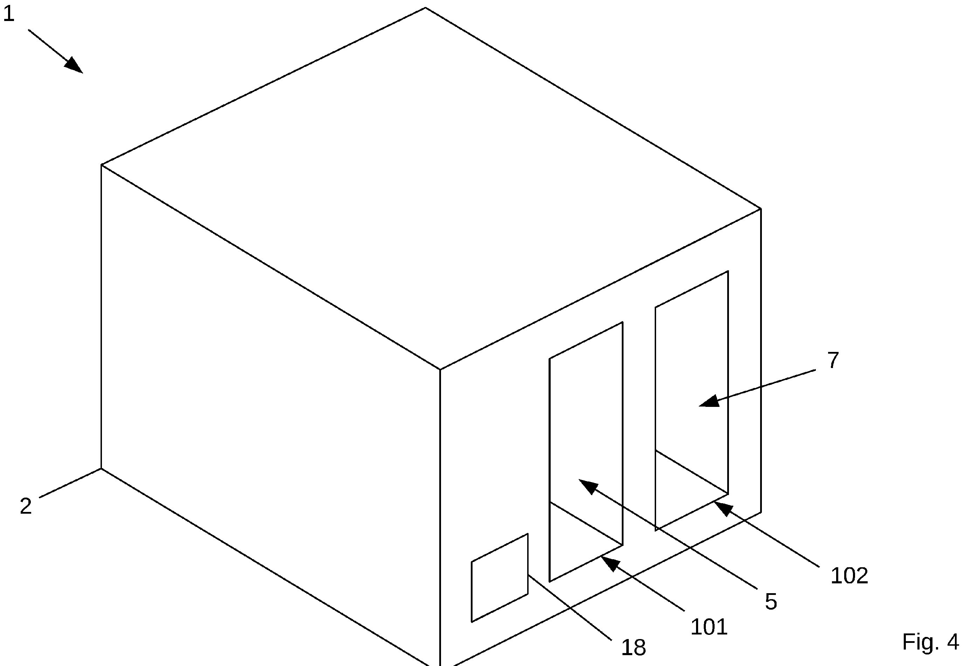

Fig. 4 zeigt eine Ausführungsform des erfindungsgemäßen elektrischen Grills 1 umfassend einen auf der Frontseite des Gehäuses 2 angeordneten ersten Einschub 101 zu einer Grillkammer 5 sowie einen paarweise dazu angeordneten zweiten Einschub 102 zu einer Garkammer 7 mit jeweils einem zugeordneten nicht gezeigten ersten Grillrost 6 und zweiten Grillrost 200 sowie einer auf der Frontseite des Gehäuse 2 angeordneten Ein- und Ausgabeeinheit 18.

Diese Ausführungsform ist eine Kombination aus den in Fig. 1 bis Fig. 3 gezeigten Ausführungsformen und hat den Vorteil, dass wie in Fig. 2 zwei Grillgut-Stücke gleichzeitig verarbeitet werden können. Darüber hinaus kann diese Ausführungsform gestapelt und/oder nebeneinander in einer Vielzahl angeordnet werden.

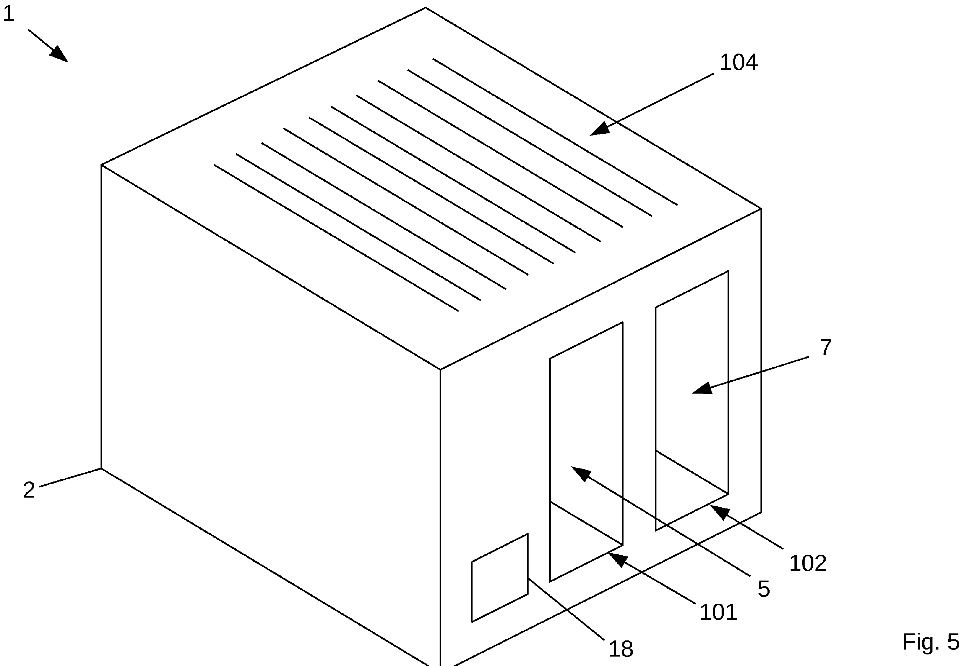

Fig. 5 zeigt eine Ausführungsform des erfindungsgemäßen elektrischen Grills 1 mit einer Ablage 104 auf der Oberseite des Grills 1. Die Ablage 104 stellt einen verstärkten Bereich, bevorzugt mit Sicken und/oder Verstärkungselementen auf der Oberseite des Gehäuses 2 dar. In dieser Ausführungsform ist das Gehäuse 2 bevorzugt an der Oberseite nicht isoliert, um einen Wärmeübertrag von der erhitzen Luft im Innern des Gehäuses 2 zur Ablage 104 zu ermöglichen. In besonders vorteilhafter Weise kann die Ablage 104 als konventionelle Grillplatte für weiteres Grillgut verwendet werden.

Dies hat den Vorteil, dass das fertige Grillgut auf der Oberseite des Gehäuses 2 auf beispielsweise einem Teller wie auf einer Warmhalteplatte abgestellt und kurzfristig warmgehalten werden kann.

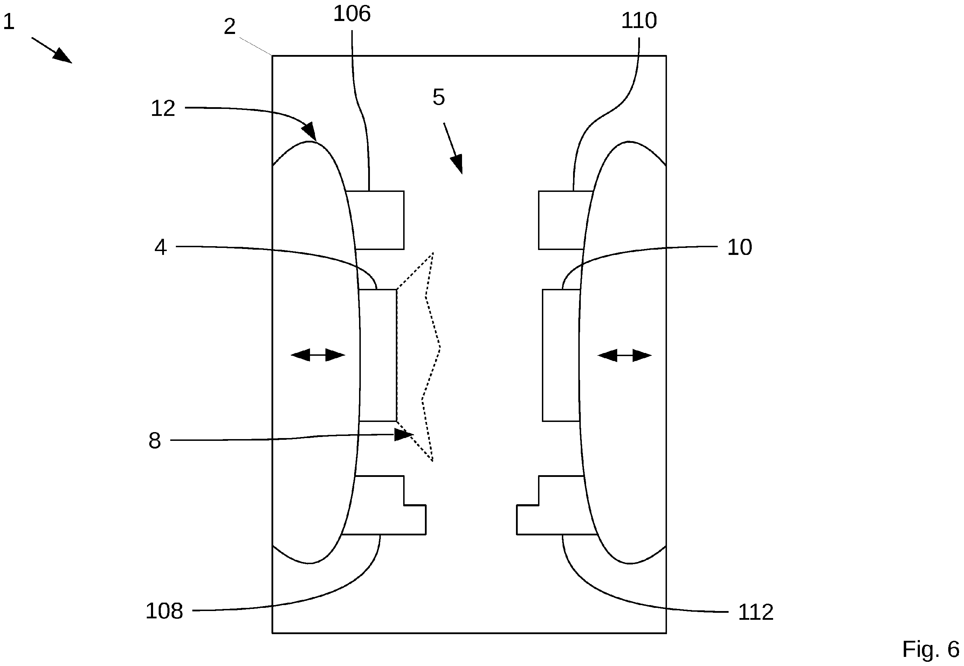

Fig. 6 zeigt eine schematische Schnittdarstellung des erfindungsgemäßen elektrischen Grills 1 umfassend ein Gehäuse 2, eine am Gehäuse 2 aufgenommene Zentriereinrichtung 12 sowie ein jeweils paarweise an der Zentriereinrichtung 12 aufgenommes erstes oberes Distanzstück 106 und Distanzstück 110, ein jeweils unteres paarweise an der Zentriereinrichtung 12 aufgenommenes Distanz- und Auflagestück 108 und Distanz- und Auflagestück 112. Weiterhin zeigt Fig. 6 einen ersten an der Zentriereinrichtung 12 aufgenommenen Infrarot-Flächenstrahler 4 sowie einen auf der dem ersten Infrarot-Flächenstrahler 4 gegenüberliegenden Seite an der Zentriereinrichtung 12 aufgenommenen weiteren Infrarot-Flächenstrahler 10. Der Abstrahlbereich 8 des ersten Infrarot-Flächenstrahlers 4 ist schemenhaft durch eine Strichpunktlinie angedeutet.

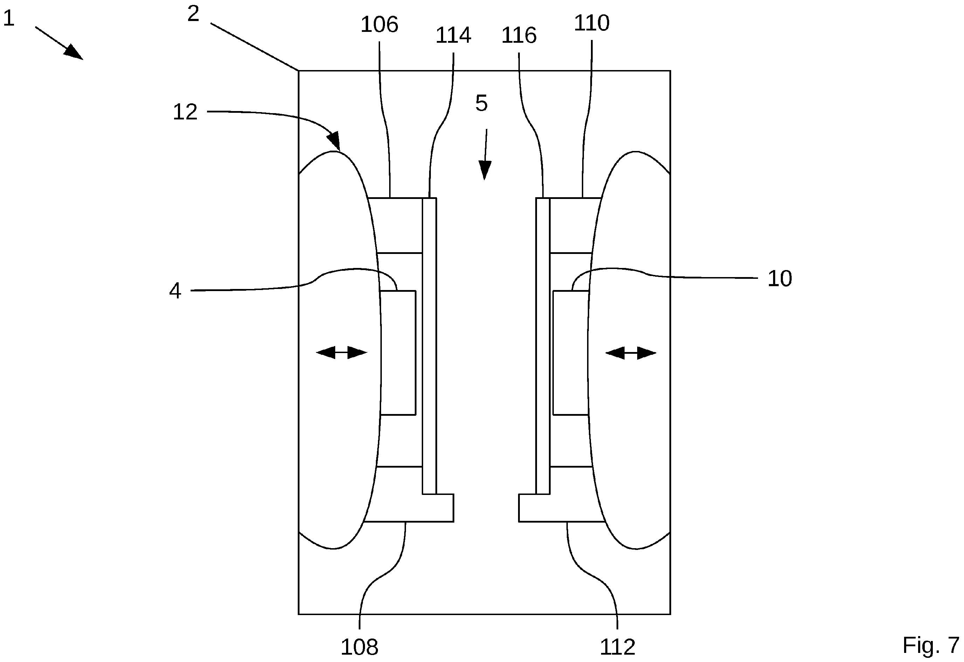

Fig. 7 zeigt eine Erweiterung der Ausführungsform aus Fig. 6 mit einem zusätzlich paarweise angeordneten ersten Schutzglas 114 vor dem ersten Infrarot-Flächenstrahler 4 und einem weiteren Schutzglas 116 vor dem weiteren Infrarot-Flächenstrahler 10.

Dies hat den Vorteil, dass Verbrennungsrückstände die beim Grillen vom Grillgut entstehen gegen das Schutzglas 114 spritzen und somit nicht auf den Infrarot-Flächenstrahler 4 gelangen. Darüber hinaus ist das Schutzglas 114 vorzugsweise lösbar, vorzugsweise über Klammern oder Spreizstifte aufgenommen und kann nach der Benutzung beispielsweise in einem Geschirrspüler oder von Hand gereinigt werden. Bevorzugt besteht das Schutzglas 114 überwiegend aus einem keramischen Werkstoff, insbesondere einer Glaskeramik oder aus Quarzglas.

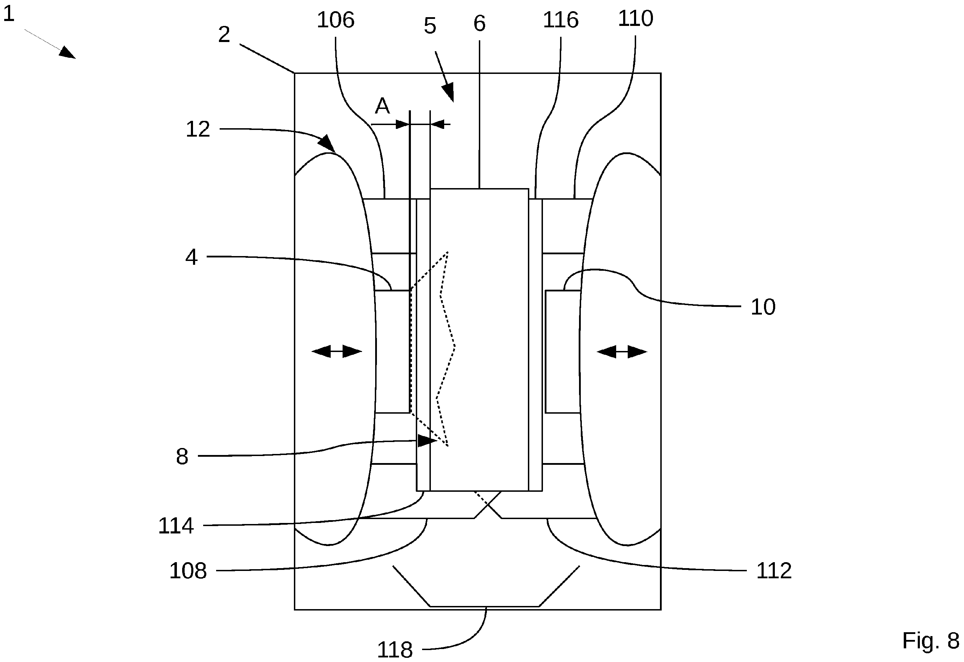

Fig. 8 zeigt eine bevorzugte Ausführungsform der Erfindung, mit einem in der Zentriereinrichtung 12 geführten Grillrost 6, welcher auf der sich bildenden Fläche des ersten Distanz- und Auflagestücks 108 und des zweiten Distanz- und Auflagestücks 112 aufliegt, einer im Bereich des Bodens unterhalb des Grillrosts 6 angeordneten Auffangschale 118. Weiterhin ist der Abstand A zwischen dem ersten Infrarot-Flächenstrahler 4 und dem Grillrost 6 gezeigt, welcher im Bereich von 0 cm bis 10 cm, bevorzugt 0,4 cm bis 5 cm, besonders bevorzugt 0,5 cm bis 4 cm liegt. Weiterhin ist der Abstand A für unterschiedliches Grillgut möglichst konstant und/oder kann einstellbar sein, beispielsweise durch eine nicht gezeigte Verstelleinrichtung am Grillrost 6.

Die Auffangschale 118 kann auch mit einer anderen beschriebenen Ausführungsformen der Erfindung kombiniert werden. Dabei ist die Auffangschale 118 vorzugsweise so am Gehäuse 2 aufgenommen, dass diese von außen beispielsweise durch eine nicht gezeigte Luke oder einen weiteren Einschub aus dem Gehäuse 2 entfernbar ist. Die Auffangschale 118 ist während des Betriebs beispielsweise mit Wasser, einer anderen Flüssigkeit oder einem Granulat gefüllt, um ein Verbrennen von Fett und/oder Öl in der Auffangschale zu verhindern.

Die Spitzen des ersten Distanz- und Auflagestücks 108 und des zweiten Distanz- und Auflagestück 112 greifen vorzugsweise verzahnt ineinander und ermöglichen ein Auseinander- und Zusammenfahren der Zentriereinrichtung 12 während ein Grillrost 6 auf der sich ergebenen Fläche aufliegt.

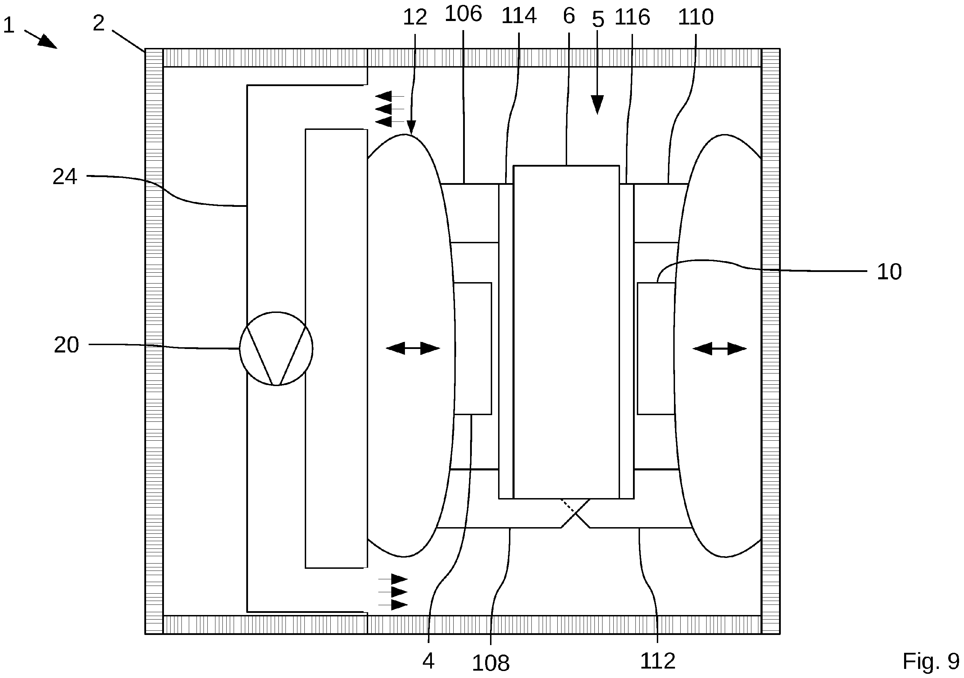

Wie in Fig. 9 gezeigt ist, kann das Gehäuse 2 vorzugsweise teilweise isoliert ausgeführt sein. Dies hat den Vorteil, dass die Temperatur während des Betriebs auf der Außenseite des Gehäuses 2 in den isolierten Bereichen reduziert ist. Ein weiterer Vorteil ergibt sich, durch einen Ventilator 20, der die durch Konvektion erwärmte Luft im inneren des Gehäuse 2 vorzugsweise im Bereich der Decke absaugt und durch einen Luftkanal 24 im Bereich des Bodens wieder zuführt. Dadurch entsteht eine Art Umluftgrill, der zusätzlich zu der Wärmestrahlung mit dem Wärmeübertrag beziehungsweise Konvektion grillt und damit den Wirkungsgrad weiter steigert.

Besonders vorteilhaft ist die Anordnung des Ventilator 20 und des Luftkanals 24 im Inneren des Gehäuses 2, dies führt zu einer sehr kompakten Bauweise.

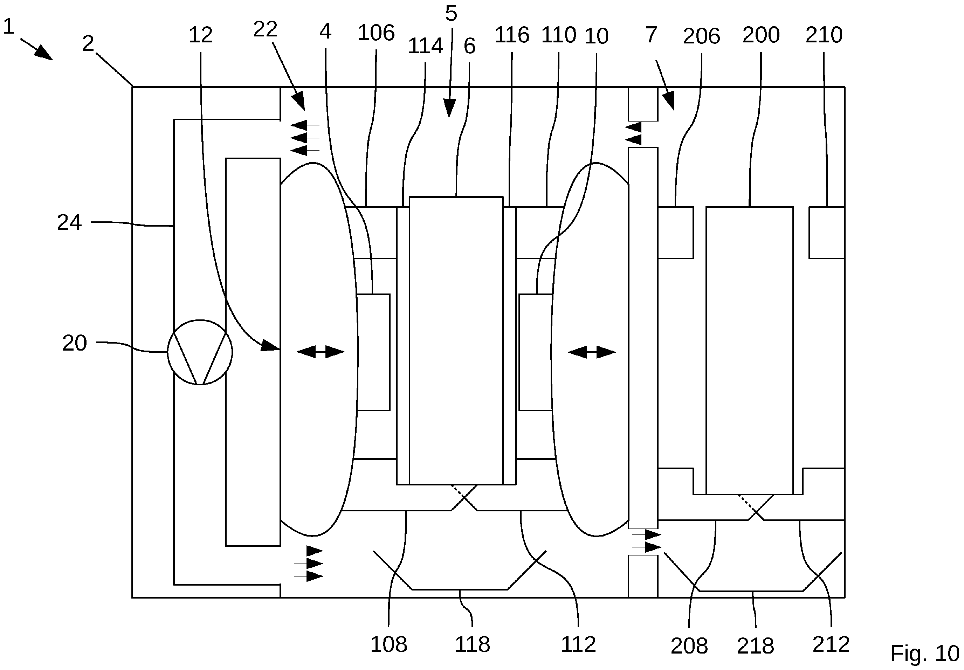

Fig. 10 zeigt eine bevorzugte Ausführungsform eines erfindungsgemäßen Grills 1 mit einer Grillkammer 5, einer Garkammer 7 sowie einem Ventilator 20. Diese Ausführungsform stellt eine mögliche Kombination der Ausführungsformen nach den Figuren 1 bis 9 dar, und kann weiterhin durch eine beliebige Kombination weiterer Merkmale der beschriebenen weiteren Ausführungsformen ergänzt werden. Besonders vorteilhaft sind die durch nicht gekennzeichnete Pfeile angedeuteten Verbindungsbereiche zwischen der Grillkammer 5 und der Garkammer 7, welche eine Konvektion der Luft von der Grillkammer 5 in die Garkammer 7 und umgekehrt zulassen. Die Pfeilrichtung der Pfeile ist dabei lediglich symbolisch zu betrachten und spiegelt nicht die zwangsläufig herrschende Luftströmung wider. Die Garkammer 7 umfasst ein paarweise angeordnetes erstes Distanz- und Auflagestück 208 und zweites Distanz- und Auflagestück 212, sowie ein darüber angeordnetes jeweils zugehöriges erstes Distanzstück 206 und zweites Distanzstück 210, sowie einen weiteren auf der sich ergebenen Fläche zwischen dem ersten Distanz- und Auflagestück 208 und zweiten Distanz- und Auflagestück 212 ablegbares Grillrost 200. Das erste Distanzstück 206 und zweite Distanzstück 210 dienen der seitlichen Führung des Grillrosts 200.

Die Fig. 10 zeigt weiterhin eine erste Auffangschale 118 in der Grillkammer 5 sowie eine zweite Auffangschale 218 in der Garkammer 7, wobei die Auffangschale 218 in der Garkammer 7 vorteilhafter Weise dazu ausgebildet ist, die vom Grillgut während des Garens abtropfende Flüssigkeit aufzufangen, um beispielsweise eine Sauce daraus herzustellen.

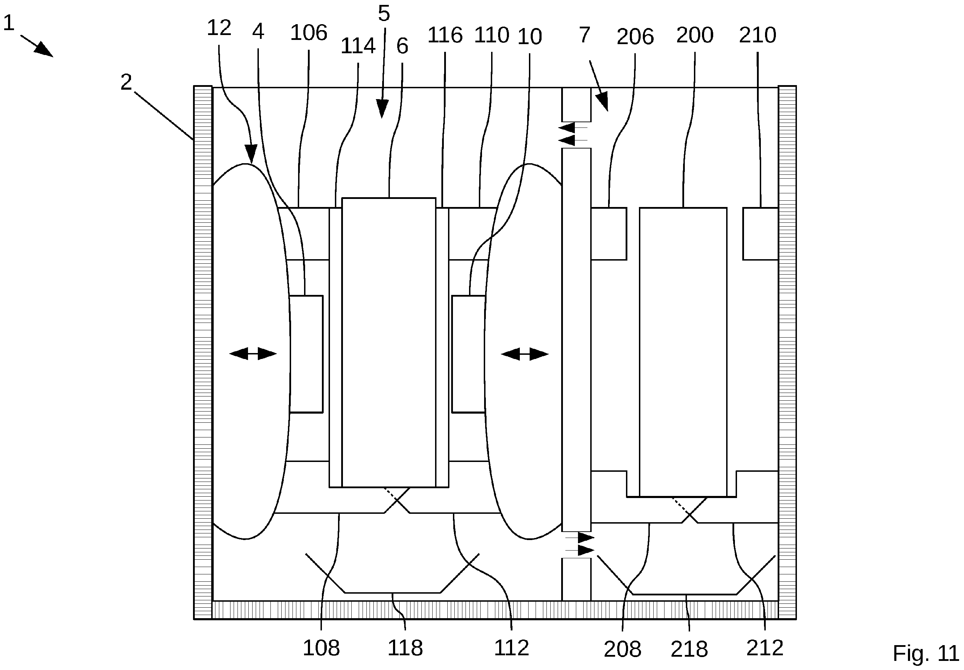

In Fig. 11 ist eine Ausführungsform eines erfindungsgemäßen Grills 1 mit einem teilweise isolierten Gehäuse 2, einer Grillkammer 5 umfassend zwei gegeneinander wirkende vertikal am Gehäuse 2 aufgenommene Heizelemente, einer seitlich neben der Grillkammer 5 angeordneten Garkammer 7 sowie einen ersten Grillrost 6 und einen weiteren Grillrost 200 gezeigt. Diese Ausführungsform zeichnet sich dadurch aus, dass das erste Heizelement ein elektrischer Infrarot-Flächenstrahler 4 ist, welcher eine Temperatur von mehr als 600 °C erreicht und dass das zweite Heizelement ein elektrischer Infrarot-Flächenstrahler 10 ist, welcher eine Temperatur von mehr als 600 °C erreicht.

Die Fig. 11 zeigt weiterhin eine Zentriereinrichtung 12 an der ein erstes Distanz- und Auflagestück 108 und ein zweites Distanz- und Auflagestück 112 angeordnet ist, welche an ihren den Grillrost aufnehmbaren Enden verzahnt ineinander greifbar ausgeführt sind. Ebenso ist ein die Grillkammer 5 und Garkammer 7 verbindender Verbindungsabschnitt durch den erwärmte Luft aus der Grillkammer 5 in die Garkammer 7 zirkulieren kann gezeigt.

Diese Ausführungsform bietet sich besonders für die Gehäuseform nach Fig. 5 an.

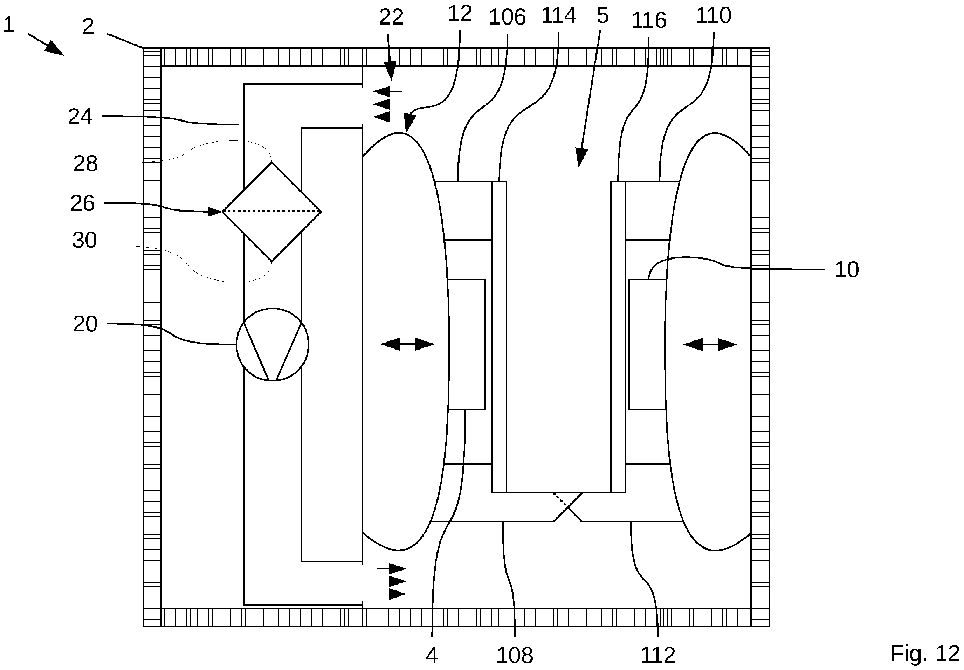

Fig. 12 zeigt eine Ausführungsform eines erfindungsgemäßen Grills 1 mit einer Grillkammer 5 sowie einen vor dem Ventilator 20 stromaufwärts angeordneten Filter 26.

Diese Ausführungsform hat den Vorteil, dass der während des Betriebs entstehende Grillgeruch durch den Filter 26 reduziert wird, da die aus dem Grillgut gelösten und in der Luft 22 befindlichen Rückstände herausgefiltert werden. Dabei ist der Filter 26 vorzugsweise so auszulegen, dass es nicht zu einer Verbrennung von Ablagerungen im Filter 26 kommt. Beispielsweise kann der Filter 26 ein Metallfilter 28 sein und als weitere Schutzmaßnahme eine Flammendurchschlagsicherung 30 aufweisen.

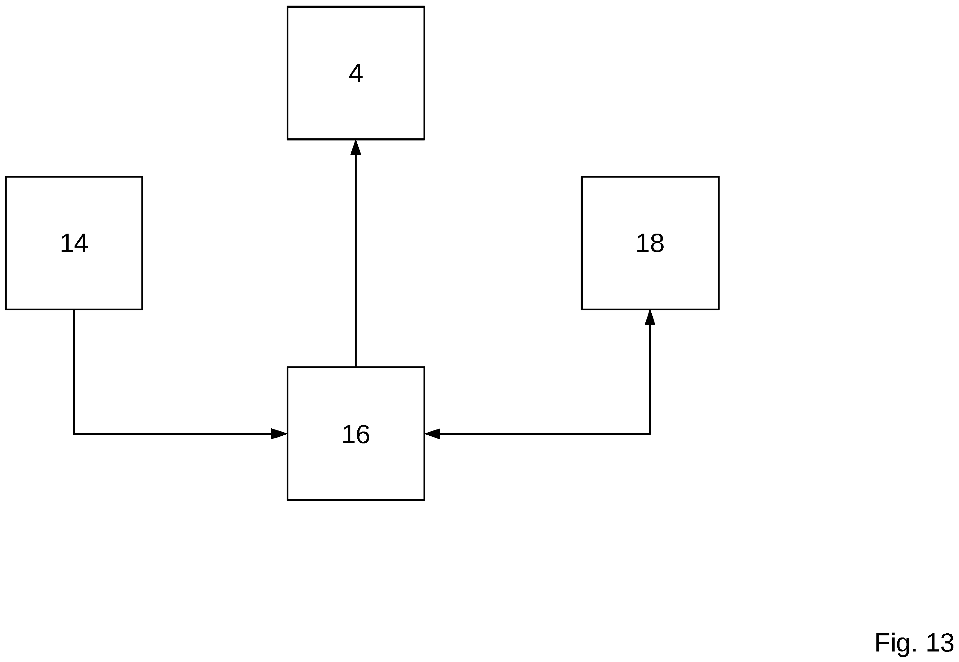

Die Fig. 13 zeigt ein Funktions-Blockdiagramm beziehungsweise Blockschaltbild eines erfindungsgemäßen Grills 1 mit einer Steuerungseinheit 16, einem Temperatursensor 14, einer Ein- und Ausgabeeinheit 18 sowie einem Infrarot-Flächenstrahler 4.

Das Blockschaltbild zeigt vorteilhafte Verbindungsmöglichkeiten der einzelnen Komponenten, die durch Pfeile angedeutet sind. Dabei ist die Steuerungseinheit 16 mit dem Temperatursensor 14 in der Art verbunden, dass diese die aktuelle Temperatur ermitteln kann, beispielsweise stellt der Temperatursensor 14 die Temperatur als digitalen Wert bereit oder der Temperatursensor 14 verändert seinen elektrischen Widerstand in Abhängigkeit der Temperatur in der Weise, dass diese Änderung durch die Steuerungseinheit 16 erfasst werden kann und die Temperatur daraus ableiten kann. Weiterhin ist die Ein- und Ausgabeeinheit 18 mit der Steuerungseinheit 16 bidirektional verbunden, sodass beide Komponenten über beispielsweise ein BUS-System Nachrichten senden und empfangen können. Die Ein- und Ausgabeeinheit 18 umfasst vorzugsweise weiterhin nicht dargestellte weitere Komponenten, wie beispielsweise ein Touch-Bedienfeld, ein Touch-Monitor, eine Funkschnittstelle beispielsweise Bluetooth, W-LAN und/oder NFC, Schalter sowie Knöpfe. Über die Ein- und Ausgabeeinheit 18 kann Einfluss auf die Steuerungseinheit 16 genommen werden, beispielsweise können folgende Grill-Parameter, Grill-Dauer, Grill-Temperatur, Grill-Temperaturkurve, Abschaltzeit, Vorheiztemperatur sowie Art des Grillguts angepasst werden. Die Steuerungseinheit 16 ist weiterhin mit dem Infrarot-Flächenstrahler 4 verbunden und kann diesen beispielsweise aktiveren sowie deaktivieren, beziehungsweise ein- und ausschalten.

Bei einer besonders bevorzugten Ausführungsform der Erfindung ist der Temperatursensor 14 in das Gehäuse des Infrarot-Flächenstrahlers 4 integriert und das Blockschaltbild könnte in diesem Fall den Infrarot-Flächenstrahler 4 und Temperatursensor 14 in einem neuen gemeinsamen Block darstellen.

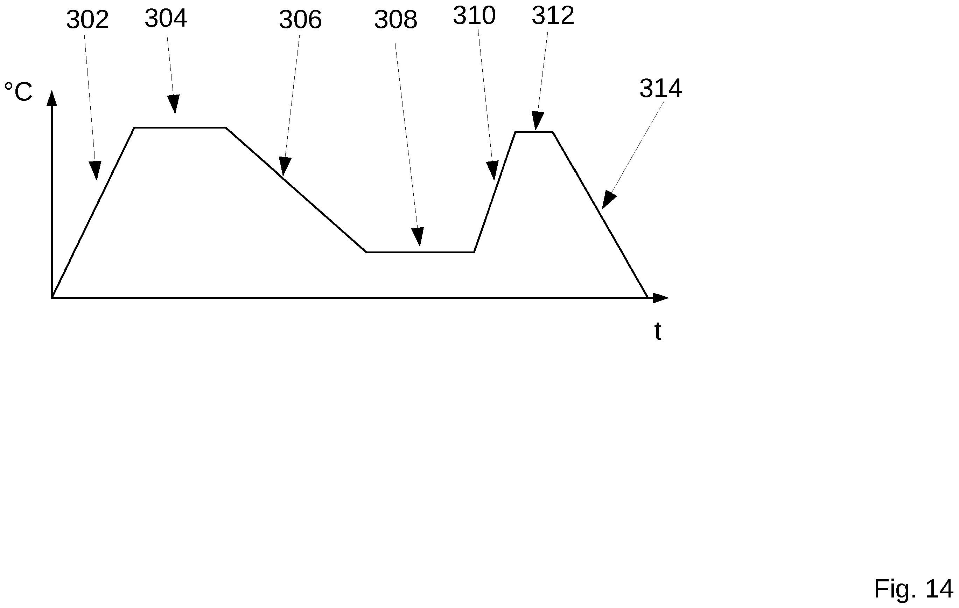

Fig. 14 zeigt einen beispielhaften Temperaturverlauf beziehungsweise eine Temperaturkurve in der Grillkammer 5 eines erfindungsgemäßen Grills 1 mit beispielsweise nur einer Grillkammer 5. Dabei stellt die Aufheizphase 302 den Temperaturanstieg nach dem Einschalten des Grills 1 und dem Aktivieren des Infrarot-Flächenstrahlers 4 dar, bis die durch den Temperatursensor 14 erfasste Temperatur der Grilltemperatur 304 entspricht. In vorteilhafter Weise kann die Grilltemperatur 304 durch die Steuerungseinheit 16 auf einen im Speicher der Steuerungseinheit 16 abgelegten Wert gesteuert beziehungsweise geregelt werden. Die Grilltemperatur 304 wird für eine Zeit, bevorzugt eine im Speicher der Steuerungseinheit 16 abgelegten Wert gehalten und anschließend wird die Temperatur in der Abkühlphase 306 auf die Gartemperatur 308 abgesenkt. Nach einer weiteren Zeitspanne, die ebenfalls im Speicher der Steuerungseinheit 16 abgelegt sein kann, wird der Infrarot-Flächenstrahler 4 erneut aktiviert und die Temperatur in einer weiteren Aufheizphase 310 bis zum erreichen einer weiteren Grilltemperatur 312 aufgeheizt. Dieses erneute Aufheizen und sogenannte Nachgrillen dient der Krustenbildung des Grillguts, beispielsweise der von Rindfleisch. Anschließend wird die Temperatur in einer erneuten Abkühlphase 314 durch Deaktivieren des Infrarot-Flächenstrahlers 4 abgesenkt.

### Liste der Bezugszeichen

- 1: Grill
- 2: Gehäuse
- 4: Infrarot-Flächenstrahler
- 5: Grillkammer
- 6: Grillrost
- 7: Garkammer
- 8: Abstrahlbereich
- 10: Infrarot-Flächenstrahler
- 12: Zentriereinrichtung
- 14: Temperatursensor
- 16: Steuerungseinheit
- 18: Ein- und Ausgabeeinheit
- 20: Ventilator
- 22: Luft
- 24: Luftkanal
- 26: Filter
- 28: Metallfilter
- 30: Flammendurchschlagsicherung
- 101: Einschub
- 102: Einschub
- 104: Ablage
- 106: Distanzstück
- 108: Distanz- und Auflagestück
- 110: Distanzstück
- 112: Distanz- und Auflagestück
- 114: Schutzglas
- 116: Schutzglas
- 118: Auffangschale
- 200: Grillrost
- 206: Distanzstück
- 208: Distanz- und Auflagestück
- 210: Distanzstück
- 212: Distanz- und Auflagestück
- 218: Auffangschale
- 302: Aufheizphase
- 304: Grilltemperatur
- 306: Abkühlphase
- 308: Gartemperatur
- 310: Aufheizphase
- 312: Grilltemperatur
- 314: Abkühlphase
- A: Abstand

## Patentansprüche

1. Elektrischer Grill (1) zum Grillen von Grillgut, beispielsweise Fleisch, umfassend ein Gehäuse (2), ein am Gehäuse (2) aufgenommenes erstes Heizelement und ein Grillrost (6), wobei das erste Heizelement ein elektrischer Infrarot-Flächenstrahler (4) ist, welcher eine Temperatur von mehr als 600 °C, vorzugsweise mehr als 800 °C, bevorzugt mehr als 850 °C, besonders bevorzugt mehr als 900 °C erreicht, wobei der erste elektrische Infrarot-Flächenstrahler (4) vertikal am Gehäuse (2) aufgenommen ist, und dass der Grillrost (6) parallel zum ersten Infrarot-Flächenstrahler (4) am Gehäuse (2) positionierbar ist, in der Art, dass der Grillrost (6) im Wesentlichen im Abstrahlbereich (8) des ersten elektrischen Infrarot-Flächenstrahlers (4) positionierbar ist und dass ein weiterer elektrischer Infrarot-Flächenstrahler (10) auf der dem ersten elektrischen Infrarot-Flächenstrahler (4) gegenüberliegenden Seite am Gehäuse (2) aufgenommen ist
**dadurch gekennzeichnet,**
**dass** der Grillrost (6) über eine Zentriereinrichtung (12) geführt ist und dass die Zentriereinrichtung (12) am Gehäuse (2) aufgenommen ist und dass der erste elektrische Infrarot-Flächenstrahler (4) über die Zentriereinrichtung (12) am Gehäuse (2) aufgenommen ist, in der Art, dass der Abstand (A) zwischen dem ersten elektrischen Infrarot-Flächenstrahler (4) und dem Grillrost (6) im Wesentlichen konstant ist.

2. Elektrischer Grill nach einem der vorhergehenden Ansprüche,
**dadurch gekennzeichnet,**
**dass** der elektrische Grill (1) weiterhin einen Temperatursensor (14) sowie eine Steuerungseinheit (16) umfasst, über welche zumindest der erste Infrarot-Flächenstrahler (4) steuerbar und/oder regelbar ist, bevorzugt in Abhängigkeit der Temperatur.

3. Elektrischer Grill nach Anspruch 2,
**dadurch gekennzeichnet,**
**dass** der elektrische Grill (1) weiterhin eine Ein- und Ausgabeeinheit (18) zur Eingabe von Grill-Parametern, vorzugsweise Temperatur und/oder Grilldauer umfasst und dass die Ein- und Ausgabeeinheit (18) mit der Steuerungseinheit (16) kommuniziert.

4. Elektrischer Grill nach einem der vorhergehenden Ansprüche,
**dadurch gekennzeichnet,**
**dass** der elektrische Grill (1) weiterhin einen Ventilator (20) umfassend, welcher die Luft (22) oberhalb des Grillrosts (6) absaugt und durch einen Luftkanal (24) im Innern des Gehäuses (2) unterhalb des Grillrosts (6) ausbläst.

5. Elektrischer Grill nach Anspruch 4,
**dadurch gekennzeichnet,**
**dass** der Luftkanal (24) einen Filter (26) umfasst, vorzugsweise einen Metallfilter (28) mit Flammendurchschlagsicherung (30) durch den die abgesaugte Luft (22) geleitet wird.

6. Elektrischer Grill nach einem der vorhergehenden Ansprüche,
**dadurch gekennzeichnet,**
**dass** der erste elektrische Infrarot-Flächenstrahler (4) ein elektrisch betriebener keramischer Infrarot-Flächenstrahler ist, welcher Infrarotstrahlung im Wesentlichen im Wellenlängenbereich von 3 µm bis 50 µm aussendet.

7. Elektrischer Grill nach einem der vorhergehenden Ansprüche,
**dadurch gekennzeichnet,**
**dass** an dem Grillrost (6) ein Schutzglas (114) aufnehmbar ist, welches überwiegend aus einer Glaskeramik besteht.

## Claims

1. Electric grill (1) for grilling barbecue food, for example meat, comprising a housing (2), a first heating element arranged in said housing (2) and a grill grate (6), said first heating element being an electric infrared surface radiator (4) which can create a temperature of more than 600°C, preferably more than 800°C, preferably more than 850°C, particularly preferably more than 900°C, wherein said first electric infrared surface radiator (4) being arranged vertically in said housing (2), and said grill grate (6) can be positioned parallel to said first infrared surface radiator (4) in said housing (2), in such a way that said grill grate (6) can be positioned essentially in the radiation region (8) of said first electric infrared surface radiator (4), and that a further electric infrared surface radiator (10) is arranged on the side of said housing (2) opposite to said first electric infrared surface radiator (4)
**characterized in that**
said grill grate (6) is guided via a centring means (12), wherein said centring means (12) is connected to said housing (2), and said first electric infrared surface radiator (4) is connected to said housing (2) by means of said centring device (12), in such a way that the distance (A) between said first electric infrared surface radiator (4) and said grill grate (6) is mainly constant.

2. Electric grill (1) according to claim 1,
**characterized in that,**
said electric grill (1) further comprising a temperature sensor (14) and a control unit (16), wherein said control unit (16) can control and/or regulate at least said first infrared surface radiator (4), preferably as a function of the temperature.

3. Electric grill (1) according to claim 2,
**characterized in that,**
said electric grill (1) further comprising input and output means (18) for inputting grill parameters, preferably temperature and/or grill duration, and that said input and output means (18) communicate with the control unit (16).

4. Electric grill (1) according to any of the previous claims,
**characterized in that,**
said electric grill (1) further comprising a fan (20) which sucks off the air (22) above said grill grate (6) and blows it out through an air duct (24) in the interior of said housing (2) below the grill grate (6).

5. Electric grill (1) according to claim 4,
**characterized in that,**
said air duct (24) comprising a filter (26), preferably a metal filter (28) with a flame arrester (30), through which said extracted air (22) is passed.

6. Electric grill (1) according to any of the previous claims,
**characterized in that,**
said first electric infrared surface radiator (4) is an electrically operated ceramic infrared surface radiator which emits infrared radiation mainly in the wavelength range from 3 µm to 50 µm.

7. Electric grill (1) according to any of the previous claims,
**characterized in that,**
a protective glass (114) can be arranged on said grill grate (6), which consists mainly of glass ceramic.

## Revendications

1. Gril électrique (1) pour griller des objets à griller, par exemple de la viande, comprenant un boîtier (2), un premier élément chauffant logé sur le boîtier (2) et un gril (6), dans lequel le premier élément chauffant est un chauffage superficiel électrique à infrarouge (4) atteignant une température supérieure à 600°C, de préférence supérieure à 800°C, de préférence supérieure à 800°C, de préférence supérieure à 850°C, tout particulièrement de préférence supérieure à 900°C, dans lequel le premier chauffage superficiel électrique à infrarouge (4) est logé verticalement sur le boîtier (2), et en ce que le gril (6) est positionné parallèlement au premier chauffage superficiel électrique à infrarouge (4) sur le boîtier (2), de telle manière que le gril (6) est positionné dans la zone de rayonnement (8) du premier chauffage superficiel électrique à infrarouge (4), et en ce qu'un autre chauffage superficiel électrique à infrarouge (10) est logé sur le côté du boîtier (2) opposé au premier chauffage superficiel électrique à infrarouge (4)
**caractérisé**
**en ce que** le gril (6) est guidée au-dessus d'un dispositif de centrage (12), et en ce que le dispositif de centrage (12) est logé sur le boîtier (2), et en ce que le premier chauffage superficiel électrique à infrarouge (4) est logé sur le boîtier (2) via le dispositif de centrage (12), de telle manière que la distance (A) entre le premier chauffage superficiel électrique à infrarouge (4) et le gril (6) est considérablement constante.

2. Gril électrique suivant l'une des revendications précédentes,
**caractérisé**
**en ce que** le gril électrique (1) comprend en outre un capteur de température (14) et une unité de commande (16), laquelle peut contrôler et/ou régler au moins le premier chauffage superficiel électrique à infrarouge (4), de préférence en fonction de la température.

3. Gril électrique suivant la revendication 2,
**caractérisé**
**en ce que** le gril électrique (1) comprend en outre une unité d'entrée et de sortie (18) pour entrer des paramètres du gril, de préférence la température et/ou la durée du cuisson, et en ce que l'unité d'entrée et de sortie (18) communique avec l'unité de commande (16).

4. Gril électrique suivant l'une des revendications précédentes,
**caractérisé**
**en ce que** le gril électrique (1) comprend en outre un ventilateur (20) qui aspire l'air (22) au-dessus du gril (6) et le souffle à travers un conduit d'air (24) à l'intérieur du boîtier (2) en dessous le gril (6).

5. Gril électrique suivant la revendication 4,
**caractérisé**
**en ce que** le conduit d'air (24) comprend un filtre (26), de préférence un filtre métallique (28) avec un arrête-flammes (30), à travers lequel passe l'air aspiré (22).

6. Gril électrique suivant l'une des revendications précédentes,
**caractérisé**
**en ce que** le premier chauffage superficiel électrique à infrarouge (4) est un chauffage superficiel électrique à infrarouge céramique à commande électrique qui émet un rayonnement infrarouge essentiellement dans l'intervalle de longueur d'onde 3 µm à 50 µm.

7. Gril électrique suivant l'une des revendications précédentes,
**caractérisé**
**en ce qu'**un verre de protection (114) constitué principalement d'une vitrocéramique est logé sur le gril (6).
